# EUROPÄISCHE PATENTSCHRIFT

(11) **EP 2 513 496 B1**
(45) Veröffentlichungstag und Bekanntmachung des Hinweises auf die Patenterteilung: **07.09.2016**
(21) Anmeldenummer: 10797992.4
(22) Anmeldetag: 30.11.2010
(51) Int. Cl.: F16B 7/18

(54) **PROFILVERBINDER SOWIE PROFILVERBUND**
PROFILE CONNECTOR AND PROFILE COMPOSITE
RACCORD DE PROFILS ET ASSEMBLAGE PROFILÉ

(30) Priorität: 18.12.2009 DE 102009059703
(43) Veröffentlichungstag der Anmeldung: 24.10.2012
(73) Patentinhaber: Stauß, Ulrich, 78628 Rottweil-Göllsdorf (DE)
(72) Erfinder: Stauß, Ulrich, 78628 Rottweil-Göllsdorf (DE)
(74) Vertreter: Klocke, Peter
(86) Internationale Anmeldenummer: PCT/EP2010/007239
(87) Internationale Veröffentlichungsnummer: WO 2011/072799

(56) Entgegenhaltungen:
- EP-A2- 0 329 074
- FR-A- 1 518 329
- US-A1- 2004 025 459

## Beschreibung

Die Erfindung betrifft einen Profilverbinder zum, insbesondere orthogonalen, miteinander Verbinden zweier, jeweils mindestens eine parallel zur jeweiligen Profilstabachse (Längsmittelachse) verlaufende hinterschnittene Längsnut aufweisender Profilstäbe, umfassend eine einen ersten Antrieb aufweisende Schraube mit einem ein Außengewinde aufweisenden Schaft sowie mit einem Schraubenkopf zum Hintergreifen eines Längsnuthinterschnitts. Ferner betrifft die Erfindung einen Profilverbund, umfassend einen ersten Profilstab mit mindestens einer ersten parallel zur ersten Profilstabachse verlaufenden ersten hinterschnittenen Längsnut und einen, vorzugsweise senkrecht zum ersten Profilstab angeordneten zweiten Profilstab mit mindestens einer zweiten parallel zur zweiten Profilstabachse verlaufenden zweiten hinterschnittenen Längsnut und mindestens einen Profilverbinder.

Aus der EP 0 458 069 A1 und der DE 40 16 320 C1 ist ein dreiteiliger Profilverbinder bekannt, umfassend ein hülsenförmiges Widerlagerstück mit Außengewinde, wobei das Außengewinde als selbstschneidendes Gewinde ausgebildet ist, um das Widerlagerstück, ohne ein Gewinde vorschneiden zu müssen, in eine Längsnut eines Profilschraubstabes einschrauben zu können. Im montierten Zustand wird das hülsenförmige Widerlagerstück von einer ein Außengewinde aufweisenden Schraube durchsetzt, welche sich mit ihrem Schraubenkopf stirnseitig an dem Widerlagerstück abstützt und die mit einem Nutstein verschraubt ist, der in einer zweiten Längsnut eines zweiten Profilstabes aufgenommen ist und einen zweiten Längsnuthinterschnitt hintergreift. Nachteilig an dem bekannten Profilverbinder ist zum einen seine Vielteiligkeit (drei Teile) und darüber hinaus die schwierige Montierbarkeit, da es in der Praxis häufig Probleme bereitet mit der Schraube die Innengewindebohrung des Nutsteins zu finden, da diese bei senkrecht aufeinander stehenden Profilstäben nicht zu sehen ist.

Aus der DE 102 00 964 B4 ist ein ebenfalls dreiteilig ausgebildeter Profilverbinder bekannt, dem ein Werkzeug zum vorherigen Schneiden eines Innengewindes in eine erste Längsnut eines ersten Profilstabes zugeordnet ist, um in dieses Innengewinde eine Gewindehülse einschrauben zu können. Auch hier ist die Vielteiligkeit von Nachteil und die Tatsache, dass es in der Praxis Probleme bereitet mit der Schraube des Profilverbinders die Innengewindebohrung im zugehörigen Nutstein zu finden.

Weitere dreiteilige Profilverbinder sind in der EP 1 589 236 B1, der DE 20 2004 004 741 U1 und der DE 20 2005 004 374 U1 beschrieben. Aus der EP 1 589 2361 ist es bekannt, das selbstformende Außengewinde des Widerlagerstücks (Hülse) nicht als Schneidgewinde sondern als selbstformendes Walzgewinde ohne Schneidkanten zu gestalten, so dass das hülsenförmige Widerlagerstück beim Eindrehen in die erste Längsnut durch nicht-spanende, verdichtende Materialverdrängung in der Längsnut ein Gegengewinde formt. Nachteilig bei sämtlichen vorgenannten Profilverbindern ist deren Vielteiligkeit sowie das fortbestehende Problem des erschwerten Findens der Innengewindebohrung des der Schraube zugeordneten Nutsteins.

Die DE 203 12 075 U1 zeigt eine Profilverbinderschraube mit einem einzigen Antrieb, die sich durch einen endseitigen Zentrierdorn auszeichnet. Die bekannte Schraube dient zum Zusammenwirken mit einem in einer Profillängsnut aufnehmbaren Widerlagerstück.

Die EP 0329074 A2 beschreibt eine einen Schraubenkopf umfassende Schraube mit zwei Antriebsarten, die zum Aufbau einer Regalkonstruktion dient.

Zum weiteren Stand der Technik werden die US 2004/025459 A1 sowie die FR 1 518 329 A genannt.

Ausgehend von dem vorgenannten Stand der Technik liegt der Erfindung die Aufgabe zugrunde einen weniger als drei Teile aufweisenden Profilverbinder anzugeben, der noch dazu einfach zu montieren ist. Ferner besteht die Aufgabe darin einen Profilverbund, umfassend einen derartig verbesserten Profilverbinder anzugeben.

Diese Aufgabe wird hinsichtlich des Profilverbinders mit den Merkmalen des Anspruchs 1 sowie durch die Verwendung eines derartigen Profilverbinders zum Verbinden zweier Profilstäbe gelöst. Hinsichtlich des Profilverbundes wird die Aufgabe mit den Merkmalen des Anspruchs 9 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Um das erschwerte Finden des im Stand der Technik zum Einsatz kommenden Nutsteins zu vermeiden, schlägt die Erfindung vor, auf den Nutstein zu verzichten und stattdessen an der ein Außengewinde aufweisenden Schraube des Profilverbinders einen Schraubenkopf vorzusehen, der derart ausgebildet ist, dass er zum einen in die zweite Längsnut des zweiten Profilverbinders seitlich einschiebbar ist und andererseits den zweiten Längsnuthinterschnitt hintergreift, derart, dass die Schraube nicht senkrecht zur Längserstreckung der zweiten Längsnut aus dieser herausnehmbar bzw. führbar ist. Der Schraubenkopf ist im Gegensatz zu den bekannten Profilverbindern dem zweiten Profilstab und nicht dem ersten Profilstab zugeordnet. Der Schraubenkopf befindet sich also auf dem dem senkrecht zur Längserstreckung der Schraube verlaufenden Profilstab zugewandten axialen Ende der Schraube. Durch das Vorsehen eines entsprechend ausgebildeten Schraubenkopfes kann auf einen separaten, in die zweite Längsnut einführbaren Nutstein verzichtet werden, wodurch der erfindungsgemäße Profilverbinder mindestens ein Bauteil weniger aufweist als die bekannten Profilverbinder.

Zudem erübrigt sich das aufwändige und teilweise langwierige Suchen/Finden einer Nutsteininnengewindebohrung, wodurch die Montage mit einem nach dem Konzept der Erfindung ausgebildeten Profilverbinder schneller von der Hand geht und einfacher ist. Im Gegensatz zu den bekannten Profilverbindern dient das Außengewinde der Schraube nicht zum Herstellen einer formschlüssigen Verbindung mit einem (nicht vorhandenen) Nutstein sondern dient gemäß einer ersten, später noch zu erläuternden Alternative zum unmittelbaren Einschrauben in den ersten Profilstab, also zum Herstellen einer unmittelbaren formschlüssigen Verbindung zwischen der Schraube des Profilverbinders und dem ersten Profilstab oder gemäß einer zweiten Alternative zum Verschrauben mit einem Innengewinde einer Außengewindehülse, deren Außengewinde zum unmittelbaren Verschrauben mit dem ersten Profilverbinder ausgebildet ist. Die Ausführungsform des Profilverbinders gemäß der ersten Alternative ist besonders bevorzugt, da in diesem Fall die entsprechend ausgebildete Schraube das einzige Profilverbinderbauteil ist. Die Ausführungsform gemäß der zweiten Alternative sieht einen zweiteiligen Profilverbinder vor.

Um den nach dem Konzept der Erfindung ausgebildeten Profilverbinder, genauer die Schraube des Profilverbinders, in den Profilstab oder alternativ in die Außengewindehülse einschrauben zu können, ist auf der schraubenkopfseitigen Axialseite der Schraube ein erster Antrieb, beispielsweise ein Mehrkantantrieb, insbesondere ein Inbusantrieb oder alternativ beispielsweise ein Torxantrieb vorgesehen. Um die mittels des ersten Antriebs eingeschraubte Schraube in einem zweiten Montageschritt festziehen zu können, ist gemäß der Erfindung auf der dem ersten Antrieb abgewandten, also in Einschraubrichtung liegenden Axialseite der Schraube ein zweiter Antrieb vorgesehen. Mit diesem kann der zweite Profilstab gegen die Stirnseite des ersten Profilstabs verspannt werden. Der zweite Antrieb ist seitlich durch die Längsnut, beispielsweise mit einem Kugelkopf-Inbus-Schlüssel zugänglich. Ein Festziehen mit dem ersten Antrieb ist nicht möglich, da dieser dem Nutgrund der ersten Längsnut im ersten Profilverbinder zugewandt und somit nicht für ein Werkzeug zugänglich ist.

Der erste und/oder zweite Antrieb können/kann als Innenantrieb, beispielsweise als Inbusantrieb, oder als Außenantrieb ausgebildet werden.

Der Profilverbinder ist gemäß einer ersten, besonders bevorzugten Alternative einteilig ausgebildet und besteht aus der Schraube. Um auf ein separates Einformen, beispielsweise Schneiden, eines Innengewindes in die Wandung der ersten Längsnut mittels eines separaten Werkzeuges verzichten zu können, ist erfindungsgemäß vorgesehen, das Außengewinde als selbstformendes Gewinde auszubilden. Dabei kann das Außengewinde gemäß einer ersten Alternative selbstschneidend ausgebildet sein, also eine Schneidkante aufweisen oder alternativ als selbstformendes Walzgewinde ohne Schneidkanten realisiert sein, mit dem das Gegengewinde in der Längsnutwandung durch nicht-spanende, verdichtende Materialverdrängung erzeugbar ist. Das Außengewinde der Schraube dient bei einer einteiligen Ausführungsvariante zur Herstellung eines unmittelbaren, bevorzugt elektrisch leitenden, Formschlusses zwischen der Schraube und dem ersten Profilstab.

Gemäß einer weiteren Alternative der Erfindung ist der Profilverbinder zweiteilig ausgebildet und umfasst neben der Schraube eine der Schraube zugeordnete (Außengewinde-) Hülse. Diese weist ein Außengewinde zum unmittelbaren Zusammenwirken mit der Wandung der ersten Längsnut des ersten Profilstabes auf, wobei das Außengewinde als selbstformendes Gewinde ausgebildet ist. Hinsichtlich der Ausbildung des selbstformenden Außengewindes gibt es wiederum die zwei Alternativen selbstschneidend, also spanend oder spanfreiformend, durch den Einsatz eines entsprechenden Wälzgewindes. Die Hülse umfasst neben dem zuvor beschriebenen Außengewinde ein Innengewinde, welches ein Gegengewinde zum Außengewinde der Schraube darstellt, um die Schraube mit ihrem Außengewinde formschlüssig mit der Hülse zu verbinden. Bevorzugt ist die Axialerstreckung des Schaftes der Schraube größer als die Axialerstreckung der Hülse und somit zu gewährleisten, dass der einschraubrichtungsseitige Antrieb optimal zugänglich ist.

Insgesamt wird durch die erfindungsgemäße Ausbildung des Profilverbinders - im Vergleich zum zitierten Stand der Technik - auf mindestens ein Bauteil, bevorzugt auf zwei Bauteile verzichtet und die Montage ist aufgrund des Verzichtes auf einen Nutstein erleichtert.

In Weiterbildung der Erfindung ist mit Vorteil vorgesehen, dass das Außengewinde der Schraube (zusätzlich oder alternativ das Außengewinde der später noch zu erläuternden Hülse) mit einer Gleitbeschichtung versehen ist, um ein erleichtertes Einschrauben zu ermöglichen. Die Gleitbeschichtung kann beispielsweise auf Basis von Öl aufgebaut sein. Bevorzugt ist die Gleitbeschichtung silikonfrei. Beispielsweise handelt es sich um OGS 1300®. Alternativ kann die Gleitbeschichtung auf Basis von Silikon und/oder auf der Basis von Graphit und/oder auf der Basis von MbS₂ aufgebaut sein.

Im Hinblick auf die konkrete Ausbildung der Antriebe gibt es unterschiedliche Möglichkeiten. Diese können beispielsweise als Mehrkantantriebe oder Torxantriebe ausgebildet sein. Besonders bevorzugt ist es, wenn die Antriebe, was jedoch nicht zwingend ist, identisch ausgebildet sind, um beide Antriebe mit demselben Werkzeug betätigen zu können, so dass auf einen Werkzeugwechsel bei der Montage verzichtet werden kann.

Zur Herstellung einer elektrisch leitenden Verbindung zwischen den aneinander festzulegenden Profilstäben ist es bevorzugt, wenn, insbesondere an einer in Einschraubrichtung orientierten Unterseite des Schraubenkopfes, Kontaktmittel vorgesehen sind, mit denen eine isolierende Schicht des den Schraubenkopf aufnehmenden Profilverbinders, insbesondere eine Oxidschicht des bevorzugt aus Aluminium ausgebildeten Profilverbinders durchstoßen (beschädigt) werden kann. Als Kontaktmittel können beispielsweise ein, vorzugsweise spitzer Zahn oder mehrere Zähne, insbesondere auf der Unterseite des Schraubenkopfes vorgesehen werden und/oder eine entsprechende, von der Rauigkeit der anderen Schraubenkopfflächen abweichenden Rauigkeit. Ganz besonders zweckmäßig ist dabei, wenn die Schraube elektrisch leitend ausgebildet ist, also auch eine elektrisch leitende Oberfläche aufweist. Der elektrische Kontakt zu dem anderen Profilstab wird entweder unmittelbar über das Außengewinde der Schraube oder nur mittelbar über das Außengewinde der Schraube und unmittelbar über das Außengewinde einer später noch zu erläuternden Außengewindehülse, die mit diesem Profilstab verschraubt ist, hergestellt.

Besonders zweckmäßig ist es, wenn der ein- oder zweiteilige Profilverbinder durch Kaltumformen, insbesondere Kaltfließpressen, hergestellt ist, wodurch auf eine aufwändige spanende Bearbeitung verzichtet werden kann.

Zum erleichterten Einführen der Schraube in die erste Längsnut des ersten Profilstabes ist in Weiterbildung der Erfindung ein, insbesondere gewindefreier, Führungsabschnitt in Einschraubrichtung vor dem Außengewinde vorgesehen, der bevorzugt so bemessen ist, dass dieser mit, insbesondere geringem Spiel, von vorzugsweise weniger als 1 mm, bevorzugt weniger als 0,5 mm stirnseitig in die erste Längsnut einführbar ist. Neben dem erleichterten Einführen verhindert der Führungsabschnitt ein Verkanten der Schraube beim unmittelbaren Verschrauben mit der Wandung der ersten Längsnut des ersten Profilstabes. Auch bei der zuvor angedeuteten Ausführungsvariante mit Außengewindehülse kann das Vorsehen eines Führungsabschnittes vorteilhaft sein. Dieser ist dann so zu bemessen, dass dieser widerstandsfrei, vorzugsweise mit geringem Spiel, in die Innengewindedurchgangsbohrung der Außengewindehülse axial einführbar ist. Bevorzugt ist der Führungsabschnitt in beiden vorgenannten Fällen zylindrisch konturiert.

Besonders zweckmäßig ist es, wenn das Außengewinde der Schraube bzw. das Außengewinde der Hülse bei der zweiteiligen Ausführung als Sägezahngewinde ausgebildet ist, welches zwei unterschiedlich stark geneigte Gewindeflanken aufweist. Bevorzugt ist die weniger geneigte, d.h. vorzugsweise weitgehend radial verlaufende Flanke dem Schraubenkopf zugewandt, d.h. entgegen der Einschraubrichtung orientiert, um ein selbständiges Lösen der Schraube bzw. Hülse zu erschweren.

Die vorgeschlagene Lösung ergibt gleichzeitig eine maximale Auszugsfestigkeit in Richtung des Schraubenkopfes,

Das Außengewinde der Schraube, respektive der Hülse kann - in Abhängigkeit des Anwendungsfalles - alternativ als Links- oder Rechtsgewinde ausgebildet werden.

Bevorzugt ist die Verwendung eines wie zuvor beschrieben ausgebildeten Profilverbinders zum Herstellen eines Profilverbundes, umfassend zwei, vorzugsweise senkrecht zueinander angeordnete, Profilstäbe, wobei der zweite Profilstab mit seiner Stirnseite auf einer Längsseite des ersten Profilstabes aufliegt und der Schraubenschaft, respektive die Hülse in einer ersten Längsnut des ersten Profilstabes aufgenommen ist und der den zweiten Längsnuthinterschnitt hintergreifende Schraubenkopf in der zweiten Längsnut. Das Festziehen, d.h. das Verspannen der beiden Profilstäbe erfolgt mit dem in Einschraubrichtung liegenden, vom seitlich der ersten Längsnut zugänglichen zweiten Antrieb, wobei das Einschrauben in die erste Längsnut, respektive die Hülse mittels des auf der hiervon abgewandten Seite, d.h. entgegen der Einschraubrichtung orientierten ersten Antriebs erfolgt. Für den Fall, dass ein einteiliger, aus der Schraube bestehender Profilverbinder eingesetzt wird, ist das Außengewinde der Schraube unmittelbar mit dem ersten Profilstab, d.h. mit der Umfangswand der Längsnut, insbesondere an drei oder mehr (abhängig von der Nutgeometrie) in Umfangsrichtung voneinander beabstandeten Bereichen verschraubt, d.h. in dem Fall ist der Außengewindedurchmesser größer als der Durchmesser eines gedachten, die Nutinnenwandung aus drei in Umfangsrichtung beabstandeten Punkten berührender Kreis, der in einer senkrecht zur Längserstreckung der Längsnut liegenden Ebene angeordnet ist.

Bei der Ausführungsform mit zusätzlich zur Schraube vorgesehener (Außengewinde-) Hülse ist die Schraube mit ihrem Außengewinde mit einem Innengewinde der Hülse verschraubt, welche wiederum mit ihrem Außengewinde unmittelbar formschlüssig in ein selbstgeformtes, Gegengewinde der Nutwandung der ersten Längsnut, vorzugsweise in drei oder mehr in Umfangsrichtung voneinander beabstandeten Bereichen verschraubt ist.

Um einen optimalen Halt der beiden Profilstäbe aneinander zu erreichen, ist in Weiterbildung der Erfindung mit Vorteil vorgesehen, dass die Profilstäbe mit zwei, vorzugsweise parallel angeordneten Profilverbindern aneinander festgelegt sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine perspektivische Darstellung eines einteiligen, aus einer Schraube bestehenden Profilverbinders,
- Fig. 2:: eine ausschnittsweise, geschnittene Darstellung einer Profilverbinderschraube,
- Fig. 3:: eine perspektivische Darstellung eines Profilverbundes, umfassend zwei orthogonal zueinander ausgerichtete Profilstäbe sowie einen Profilverbinder,
- Fig. 4:: eine Seitenansicht des Profilverbundes,
- Fig. 5:: eine Längsschnittansicht entlang der Schnittlinie B - B, aus der erkennbar ist, dass (fakultativ) zwei einteilige Profilverbinder Anwendung gefunden haben, und
- Fig. 6:: eine Darstellung eines zweiteiligen Profilverbinders, bestehend aus Schraube und (Außengewinde-) Hülse.

In den Figuren sind gleiche Elemente und Elemente mit der gleichen Funktion mit den gleichen Bezugszeichen gekennzeichnet.

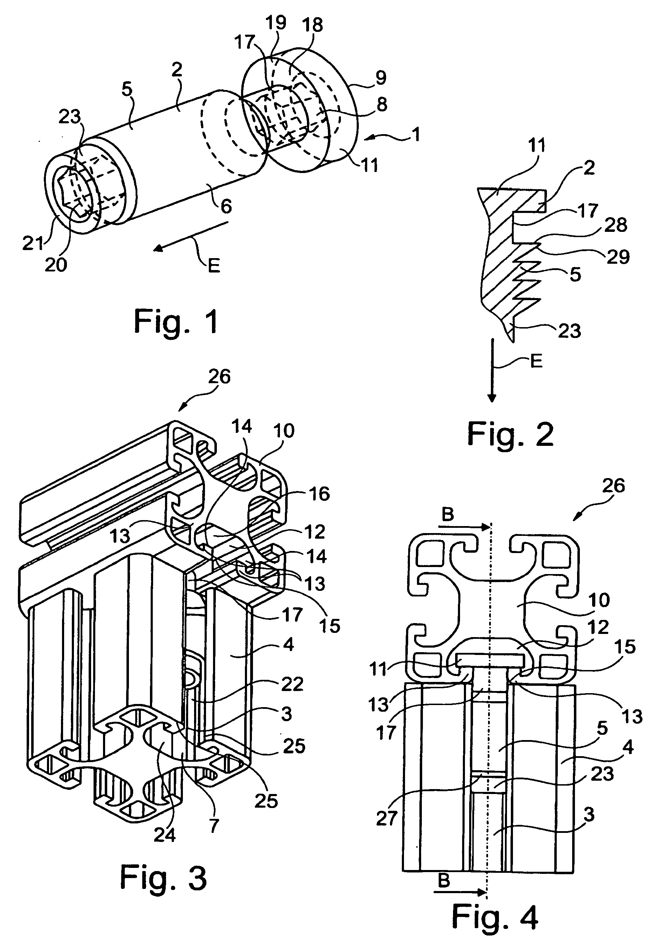

In Fig. 1 ist ein einteiliger Profilverbinder 1, bestehend aus einer Schraube 2 gezeigt. Die Schraube wird in eine Einschraubrichtung E in eine erste Längsnut 3 (vgl. Fig. 3) eines ersten, hier aus einer Leichtmetalllegierung ausgebildeten Profilstabes 4 eingeschraubt, so dass sich ein an einem Schaft 5 der Schraube ausgebildetes, hier selbstformend ausgeführtes Außengewinde 6 mit einer Wandung 7 der ersten Längsnut 3 durch Einformen eines mit dem Außengewinde 6 korrespondierenden Gegengewindes formschlüssig verbindet. Zum Einschrauben der Schraube 2 in die erste Längsnut 3 des ersten Profilstabes 4 ist ein erster, hier als Inbusantrieb ausgebildeter Antrieb 8 an einem ersten axialen Ende 9 der Schraube 2, welches der Einschraubrichtung E entgegengesetzt ist, vorgesehen. Konkret handelt es sich bei dem ersten Antrieb 8 um eine Mehrkant-, hier Sechskantvertiefung (alternativ ist auch Außenantrieb realisierbar). Nach dem Einschrauben der Schraube 2 in die erste Längsnut 3 des ersten Profilstabes 4 wird ein zweiter Profilstab 10, der in dem gezeigten Ausführungsbeispiel ebenfalls aus einer Leichtmetalllegierung ausgebildet ist und querschnittlich identisch ausgeformt ist wie der erste Profilstab 4 seitlich auf die Schraube 2 aufgeschoben, so dass ein entgegen der Einschraubrichtung E gewandter Schraubenkopf 11 der Schraube 2 in eine zweite Längsnut 12 des zweiten Profilstabes 10 eingeführt wird, derart, dass sie einen von zwei einander zugewandten Schenkeln 13 gebildeten (zweiten) Längsnuthinterschnitt 14 hintergreift. Die beiden Schenkel 13 begrenzen einen engen Nutquerschnitt 15 an den ein tiefergelegener, breiterer Nutabschnitt 16 angrenzt, der den Schraubenkopf 11 aufnimmt. Der Durchmesser des Schraubenkopfes 11 ist dabei größer bemessen als die Breite des engen Nutquerschnittes 15, wobei der Schraubenkopf 11 zudem so bemessen ist, dass er in den breiten Nutquerschnitt 16 vollständig aufnehmbar ist, also eine Höhe hat, die geringer ist als die Tiefenerstreckung des breiten Nutquerschnittes 16 und einen Durchmesser, der geringer ist als die Breitenerstreckung des breiten Nutquerschnittes 16.

Der enge Nutquerschnitt 15 wird senkrecht zur Längserstreckung des zweiten Profilstabes 10 durchsetzt von einem durchmesserreduzierten Axialabschnitt 17 der Schraube 2, der sich axial zwischen dem Schraubenkopf 11 und dem Außengewinde 5 befindet. In dem gezeigten Ausführungsbeispiel überragt der Schraubenkopf 11 den Außendurchmesser des Außengewindes 5 in radialer Richtung. An einer ringförmigen, in Einschraubrichtung E orientierten Unterseite 18 des Schraubenkopfes 11 können, beispielsweise als kleine Spitze ausgebildete Kontaktmittel 19 vorgesehen werden, mit welchen eine Oxidschicht, die elektrisch isolierend wirkt, des zweiten Profilstabes 10 verletzt werden kann, um somit eine elektrisch leitende Verbindung zwischen den Profilstäben 4, 10 herzustellen.

Nach dem vorerwähnten Aufschieben des zweiten Profilstabes 10 auf die Schraube 2, genauer auf den Schraubenkopf 11 wird die Schraube 2 mittels eines zweiten Antriebes 20, der in dem gezeigten Ausführungsbeispiel identisch ausgebildet ist wie der zweite Antrieb 8 und sich auf einer von der ersten Axialseite abgewandten zweiten, in Einschraubrichtung E orientierten Axialseite 21 der Schraube 2 befindet, festgezogen. Der erste Antrieb 20 ist seitlich durch einen engen Nutquerschnitt 22 der ersten Längsnut 3 mit einem schräg gestellten, vorzugsweise endseitig eine kugelförmige Hüllkontur aufweisenden Werkzeug zugänglich. Durch Festziehen der Schraube 2 wird der erste Profilstab 10 mit einer Längsseite gegen eine Stirnseite des ersten Profilstabes 4 verspannt.

Wie sich aus Fig. 1 ergibt, befindet sich in Einschraubrichtung E vor dem Außengewinde 5 ein zylindrisch konturierter, gewindefreier Führungsabschnitt 23, dessen Durchmesser so gewählt ist, dass dieser mit geringem Spiel von bevorzugt wenigen Zehntelmillimetern von einer Stirnseite des Profilstabes 4 her in die erste Längsnut 3 einführbar ist, wodurch zum einen die erste Längsnut 3 erleichtert gefunden wird und zum anderen die Schraube 2 beim Einschrauben des Außengewindes 5 in die (erste) Wandung 7 der ersten Längsnut 3 geführt wird, um somit ein Verkanten beim Einschraubvorgang durch Verwendung des ersten Antriebes 8 verhindert.

In dem gezeigten Ausführungsbeispiel sind die Profilstäbe 4, 10 ohne Zentralbohrung ausgeführt. Selbstverständlich können auch anders gestaltete Profilstäbe 4, 10 eingesetzt werden - wesentlich ist lediglich, dass beide Profilstäbe 4, 10 jeweils mindestens eine, insbesondere identisch ausgebildete, parallel zur Längserstreckung des jeweiligen Profilstabes 4, 10 verlaufende Längsnut 3, 12 aufweisen.

Wie sich aus Fig. 3 ergibt, ist das Außengewinde 5 der in Fig. 1 gezeigten Schraube 2 mit drei in Umfangsrichtung voneinander beabstandeten Bereichen der Wandung 7 der ersten Längsnut 3 verschraubt, und zwar in der gezeigten Ausführung mit einem Nutgrund 24 sowie mit Endbereichen der den engen Nutquerschnitt 22 begrenzenden Schenkel 25 (Längsnuthinterschnitte) der ersten Längsnut 3.

Fig. 4 zeigt den in Fig. 3 perspektivisch dargestellten Profilverbund 26 in einer Seitenansicht. Zu erkennen sind die beiden orthogonal zueinander angeordneten Profilstäbe 4, 10, wobei der erste Profilstab 4 in seiner ersten Längsnut 3 das Außengewinde 5 und die zweite Längsnut 12 den Schraubenkopf 11 aufnimmt, der den (vorderen) engeren Nutquerschnitt 15 seitlich überragt und der sich abstützt an den den Nutquerschnitt begrenzenden Schenkeln 13 (Längsnuthinterschnitt 14). In dem gezeigten Ausführungsbeispiel sind die Schenkel 13 zumindest näherungsweise L-förmig konturiert - der Profilverbinder 1 lässt sich selbstverständlich auch mit anders konturierten, beispielsweise gerade konturierten Schenkeln 13 verwenden - wesentlich ist lediglich, dass die zum Einsatz kommende Nut einen engen Nutquerschnitt und einen tiefergelegenen breiteren Nutquerschnitt zur Aufnahme des Schraubenkopfes 11 aufweist.

Wie sich aus Fig. 4. deutlich ergibt, wird der enge Nutquerschnitt 15 axial durchsetzt von einem durchmesserreduzierten Axialabschnitt 17, an welchem axial das Außengewinde 5 anschließt, an das wiederum der vordere Führungsabschnitt 23 axial anschließt, wobei zwischen Außengewinde 5 und Führungsabschnitt 23 ein Übergangskonus 27 realisiert ist.

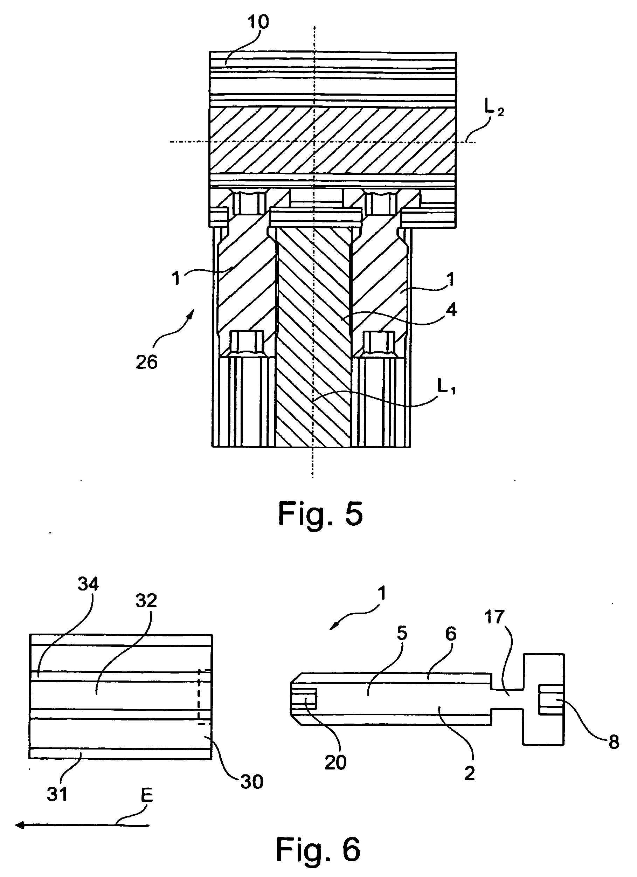

Fig. 5 zeigt den Profilverbund gemäß Fig. 4 in einer Schnittansicht entlang der Schnittlinie B - B. Zu erkennen ist der erste Profilstab 4 mit seiner Profilstabachse L₁ (Längsachse), die senkrecht orientiert ist zur Profilstabachse L₂ (Längsachse) des zweiten Profilstabes 10. Aus Fig. 5 ist zu entnehmen, dass der Profilverbund 26 im gezeigten Ausführungsbeispiel zwei identisch ausgebildete Profilverbinder 1 umfasst, wobei auch eine Ausführungsform mit nur einem einzigen Profilverbinder 1 realisierbar ist.

Fig. 2 zeigt eine bevorzugte Ausführungsvariante der Schraube 2 in einer teilweisen, geschnittenen Darstellung. Zu erkennen ist, dass das Außengewinde 5 als Sägezahngewinde ausgebildet ist, wobei das Sägezahngewinde zwei Gewindeflanken 28, 29 aufweist und zwar eine weniger stark geneigte erste Gewindeflanke 28, die entgegen der Einschraubrichtung E, d.h. in Richtung Schraubenkopf 11 orientiert ist und eine zweite Gewindeflanke 29, die im Wesentlichen in Einschraubrichtung E orientiert ist. Durch diese spezielle Ausbildung des Außengewindes 5 wird ein selbsttätiges Lösen der Schraube 2 aus dem ersten Profilstab 4 erschwert.

Fig. 6 zeigt ein alternatives Ausführungsbeispiel, welches sich von dem zuvor beschriebenen Ausführungsbeispiel eines Profilverbinders durch seine Zweiteiligkeit unterscheidet. Der Profilverbinder 1 umfasst dabei eine Hülse 30 mit einem Hülsenaußengewinde 31, das zum Einbringen in die Wandung 7 der ersten Längsnut 3 des ersten Profilstabes 4 ausgebildet ist. Das Hülsenaußengewinde 31 ist bevorzugt als selbstformendes (selbstfurchend oder walzend) oder Gewinde ausgeführt. Zum Einschrauben der eine Innengewindebohrung 32 aufweisenden Hülse 30 in den ersten Profilstab 4 umfasst die Hülse 30 einen endseitigen Hülsenantrieb 33, wobei alternativ auch auf beiden Axialseiten ein Hülsenantrieb vorgesehen werden kann. Bevorzugt ist auf der dem gezeigten Hülsenantrieb 33 abgewandten, d.h. in Einschraubrichtung E liegenden Axialseite ein nicht gezeigter Führungsabschnitt vorgesehen ist, dessen Außendurchmesser gegenüber dem Außendurchmesser des Hülsenaußengewindes 31 reduziert ist, um somit ein spielbehaftetes, widerstandsfreies Einschieben des Führungsabschnittes stirnseitig in die erste Längsnut 3 zu ermöglichen um so die Findung der ersten Längsnut 3 zu erleichtern und ein Verkanten der Hülse 30 beim Verschrauben zu verhindern.

Die Innengewindebohrung 32 ist mit einem Innengewinde 34 versehen, welches korrespondiert mit dem Außengewinde 6 der Schraube 2, wobei das Außengewinde 6 bevorzugt als nicht selbstformendes Gewinde ausgebildet ist. Die Schraube 2 weist im Bereich des Außengewindes 6 im Vergleich zu dem zuvor beschriebenen Ausführungsbeispiel einen geringeren Durchmesser auf, der so gewählt ist, dass die Schraube 2 mittels des Außengewindes 6 mit der Hülse 30 verschraubbar ist. Die Schraube 2 weist Antriebe 8, 20 auf, um die Schraube 2 zunächst mittels des ersten Antriebes 8 mit der im ersten Profilstab 4 festgelegten Hülse 30 verschrauben zu können und daraufhin die Schraube 2 mittels des zweiten Antriebs 20 festziehen zu können, um somit die beiden Profilstäbe 4, 10 miteinander zu verspannen. In dem gezeigten Ausführungsbeispiel weist die Schraube 2 einen durchmesserreduzierten Axialabschnitt 17 zwischen Schraubenkopf und Außengewinde 6 auf. Auf die Durchmesserreduzierung kann verzichtet werden, wenn der Außendurchmesser des Axialabschnittes 17, der bei Bedarf auch mit dem Außengewindes 6 versehen sein kann, so gewählt ist, dass dieser den engeren Nutquerschnitt 15 der zweiten Längsnut 12 durchsetzen kann. Die Axialerstreckung der Schraube 2 ist so gewählt, dass sich der zweite Antrieb 20 im mit der Hülse 30 verschraubten Zustand, zumindest abschnittsweise, vorzugsweise vollständig außerhalb der Hülse 30 befindet, um einen optimalen Zugang zum zweiten Antrieb 20 mittels eines Werkzeugs sicherzustellen.

### Bezugszeichenliste

- 1: Profilverbinder
- 2: Schraube
- 3: erste Längsnut
- 4: erster Profilstab
- 5: Schaft
- 6: Außengewinde
- 7: Wandung
- 8: erster Antrieb
- 9: erste Axialseite
- 10: zweiter Profilstab
- 11: Schraubenkopf
- 12: zweite Längsnut
- 13: Schenkel
- 14: Längsnuthinterschnitt
- 15: enger Nutquerschnitt
- 16: breiter Nutquerschnitt
- 17: durchmesserreduzierter Axialabschnitt
- 18: Unterseite
- 19: Kontaktmittel
- 20: zweiter Antrieb
- 21: zweite Axialseite
- 22: enger Nutquerschnitt
- 23: Führungsabschnitt
- 24: Nutgrund
- 25: Schenkel
- 26: Profilverbund
- 27: Übergangskonus
- 28: erste Gewindeflanke
- 29: zweite Gewindeflanke
- 30: Hülse
- 31: Hülsenaußengewinde
- 32: Innengewindebohrung
- 33: Hülsenantrieb
- 34: Innengewinde

- E: Ebene

- L₁: erste Profilstabachse
- L₂: zweite Profilstabachse

## Patentansprüche

1. Profilverbinder zum miteinander Verbinden zweier, jeweils mindestens eine parallel zur jeweiligen Profilstabachse verlaufende hinterschnittene Längsnut (3, 12) aufweisender Profilstäbe (4, 10), umfassend eine einen ersten Antrieb (20) aufweisende Schraube (2) mit einem ein Außengewinde (6) aufweisenden Schaft (5) sowie mit einem Schraubenkopf (11) zum Hintergreifen eines Längsnuthinterschnittes(14),
**dadurch gekennzeichnet,**
**dass** die Schraube (2) auf einer von dem ersten Antrieb (20) abgewandten Axialseite (21, 9) einen zweiten Antrieb (8) aufweist, und dass das Außengewinde (6) als selbstformendes Gewinde ausgebildet ist,
oder
**dass** der Profilverbinder (1) zweiteilig ausgebildet ist und neben der Schraube (2), die auf einer von dem ersten Antrieb (20) abgewandten Axialseite (21, 9) einen zweiten Antrieb (8) aufweist, eine der Schraube (2) zugeordnete Hülse (30) umfasst, die ein als selbstformendes, insbesondere selbstschneidendes oder spanfrei formendes, Gewinde ausgebildetes, Hülsenaußengewinde (31) zum Herstellen eines unmittelbaren Formschlusses mit einem der Profilverbinder (1) durch Einschrauben in eine der Längsnuten (3, 12) aufweist, wobei die Hülse (30) mit einem mit dem Außengewinde (6) der Schraube (2) korrespondierendes Innengewinde (34) zur verschraubenden Aufnahme der Schraube (2), deren Außengewinde (6) als ein nicht selbstformendes oder ein selbstformendes Gewinde ausgebildet ist, versehen ist, oder wobei die Hülse (30) mit einem mit dem Außengewinde (6) der Schraube (2) korrespondierendes Innengewinde (34) zur verschraubenden Aufnahme der Schraube (2) mittels des Außengewindes (6) der Schraube (2), das als selbstformendes Gewinde ausgebildet ist, versehbar ist.

2. Profilverbinder nach Anspruch 1, **dadurch gekennzeichnet, dass** das Außengewinde (6) mit einer Gleitbeschichtung versehen ist.

3. Profilverbinder nach einem der Ansprüche 1 oder 2, **dadurch gekennzeichnet, dass** die, vorzugsweise als Mehrkantantriebe oder Torxantriebe ausgebildeten Antriebe (8, 20), identisch konturiert sind.

4. Profilverbinder nach einem der vorhergehenden Ansprüche, **dadurch gekennzeichnet, dass**, insbesondere an einer in Einschraubrichtung orientierten Unterseite (18) des Schraubenkopfes (11), Kontaktmittel (19), vorzugsweise eine Verzahnung oder eine Rauheit, zum Verletzen einer elektrisch isolierenden Schicht des den Schraubenkopf (11) aufnehmenden Profilverbinders (1) vorgesehen sind.

5. Profilverbinder nach einem der vorhergehenden Ansprüche, **dadurch gekennzeichnet, dass** dieser als Kaltumformteil, insbesondere als Kaltfließpressteil, ausgebildet ist.

6. Profilverbinder nach einem der vorhergehenden Ansprüche, **dadurch gekennzeichnet, dass** in Einschraubrichtung vor dem Außengewinde (6) ein, vorzugsweise gewindefreier, Führungsabschnitt (23) vorgesehen ist, der einen geringeren Durchmesser aufweist als das Außengewinde (6).

7. Profilverbinder nach einem der vorhergehenden Ansprüche, **dadurch gekennzeichnet, dass** das Außengewinde (6) als Sägezahngewinde, umfassend zwei unterschiedlich stark geneigte Gewindeflanken (28, 29) ausgebildet ist, und dass die weniger geneigte Flanke dem Schraubenkopf (11) zugewandt ist.

8. Verwendung eines Profilverbinders (1) nach einem der vorhergehenden Ansprüche zum Herstellen eines Profilverbundes (26), umfassend einen ersten Profilstab (4) mit mindestens einer parallel zur ersten Profilstabachse (L1) verlaufenden ersten hinterschnittenen Längsnut (3) und einen zweiten Profilstab (10) mit mindestens einer parallel zur zweiten Profilstabachse (L2) verlaufenden zweiten hinterschnittenen Längsnut (12).

9. Profilverbund, umfassend einen ersten Profilstab (4) mit mindestens einer ersten parallel zur ersten Profilstabachse (L1) verlaufenden ersten hinterschnittenen Längsnut (3) und einen zweiten Profilstab (10) mit mindestens einer zweiten parallel zur zweiten Profilstabachse (L2) verlaufenden zweiten hinterschnittenen Längsnut (12) und einen Profilverbinder, nach einem der Ansprüche 1 bis 7, umfassend eine einen ersten Antrieb (20) aufweisende Schraube (2) mit einem ein Außengewinde (6) aufweisenden Schaft (5) sowie mit einem Schraubenkopf (11) zum Hintergreifen eines Längsnuthinterschnittes (14), wobei die Schraube (2) auf einer von dem ersten Antrieb (20) abgewandten Axialseite (21, 9) einen zweiten Antrieb (8) aufweist, und wobei der Schaft (5) der Schraube (1) in der ersten Längsnut (3) und der Schraubenkopf (11) in der zweiten Längsnut (12) angeordnet ist und einen Längsnuthinterschnitt (14) der zweiten Längsnut (12) hintergreift.

10. Profilverbund nach Anspruch 9, **dadurch gekennzeichnet, dass** die Schraube (1) mit ihrem Außengewinde (6) unmittelbar mit dem ersten Profilstab (4) verschraubt ist.

11. Profilverbund nach Anspruch 9, **dadurch gekennzeichnet, dass** die Schraube (2) mit ihrem Außengewinde (6) mit einem Innengewinde (34) einer mit dem ersten Profilverbinder (1) verschraubten und in der ersten Längsnut (3) aufgenommenen Hülse (30) verschraubt ist.

12. Profilverbund nach einem der Ansprüche 10 bis 11, **gekennzeichnet durch,** mindestens zwei erste Längsnuten (3) im ersten Profilstab (4), in denen jeweils ein Profilverbinder (1) aufgenommen ist.

## Claims

1. A profile connector for connecting together two profile bars (4, 10) each having at least one undercut longitudinal groove (3, 12) running parallel to the axis of the respective profile bar, said profile connector comprising a screw (2) having a first drive (20) and a shank (5) with a male thread (6) as well as a screw head (11) for engaging behind a longitudinal groove undercut (14),
**characterized in**
**that** the screw (2) has a second drive (8) on an axial side (21, 9) facing away from the first drive (20), and that the male thread (6) is designed as a self-forming thread,
or
**that** the profile connector (1) is formed from two pieces and comprises, next to the screw (2) which has a second drive (8) on an axial side (21, 9) facing away from the first drive (20), a sleeve (30) associated with the screw (2) and having a sleeve male thread (31) which is designed as a self-forming, in particular self-tapping or chip-free forming thread for establishing a direct positive locking with one of the profile connectors (1) by screwing it into one of the longitudinal grooves (3, 12), wherein the sleeve (30) is provided with a female thread (34) corresponding to the male thread (6) of the screw (2) for receiving, by screwing, the screw (2) whose male thread (6) is designed as a non-self-forming or a self-forming thread, or wherein the sleeve (30) can be provided with a female thread (34) corresponding to the male thread (6) of the screw (2) for receiving the screw (2) by screwing it by means of the male thread (6) of the screw (2), which is designed as a self-forming thread.

2. The profile connector according to claim 1, **characterized in that** the male thread (6) is provided with an anti-friction coating.

3. The profile connector according to one of claims 1 or 2, **characterized in that** the drives (8, 20) which are preferably designed as polygonal drives or Torx drives are identically contoured.

4. The profile connector according to any one of the preceding claims,
**characterized in that** contact means (19), preferably an indentation or a roughened segment, are provided, particularly on an underside (18) of the screw head (11) oriented in the screwing direction, for damaging an electrically insulating layer of the profile connector (1) receiving the screw head (11).

5. The profile connector according to any one of the preceding claims,
**characterized in that** said profile connector is designed as a cold formed part, particularly as a cold extrusion part.

6. The profile connector according to any one of the preceding claims,
**characterized in that** a guiding section (23), preferably a thread-free guiding section, is provided in the screwing direction in front of the male thread (6), said guiding section (23) having a smaller diameter than the male thread (6).

7. The profile connector according to any one of the preceding claims,
**characterized in that** the male thread (6) is designed as a buttress thread comprising two thread flanks (28, 29) of different inclination, and that the less inclined flank faces the screw head (11).

8. The use of a profile connector (1) according to any one of the preceding claims for producing a profile composite (26), comprising a first profile bar (4) having at least one first undercut longitudinal groove (3) running parallel to the first profile bar axis (L1), and a second profile bar (10) having at least one second undercut longitudinal groove (12) running parallel to the second profile bar axis (L2).

9. A profile composite, comprising a first profile bar (4) having at least one first undercut longitudinal groove (3) running parallel to the first profile bar axis (L1), and a second profile bar (10) having at least one second undercut longitudinal groove (12) running parallel to the second profile bar axis (L2), and a profile connector according to one of claims 1 to 7, comprising a screw (2) having a first drive (20) and a shank (5) with a male thread (6), as well as a screw head (11) for engaging behind a longitudinal groove undercut (14), wherein the screw (2) has a second drive (8) on an axial side (21, 9) facing away from the first drive (20), and wherein the shank (5) of the screw (1) is arranged in the first longitudinal groove (3) and the screw head (11) is arranged in the second longitudinal groove (12) and engages behind a longitudinal groove undercut (14) of the second longitudinal groove (12).

10. The profile composite according to claim 9, **characterized in that** the screw (1) is directly screwed, by means of its male thread (6), to the first profile bar (4).

11. The profile composite according to claim 9, **characterized in that** the screw (1) is screwed, by means of its male thread (6), to a female thread (34) of a sleeve (30) which is screwed to the first profile connector (1) and received in the first longitudinal groove (3).

12. The profile composite according to one of claims 10 to 11,
**characterized by** at least two first longitudinal grooves (3) included in the first profile bar (4), each of which receiving one profile connector (1).

## Revendications

1. Raccord de profils permettant de raccorder l'une à l'autre deux barres profilées (4, 10) présentant respectivement au moins une rainure longitudinale (3, 12) en contre-dépouille qui s'étend parallèlement à l'axe de la barre profilée respective, ledit raccord de profils comprenant une vis (2) présentant un premier entraînement (20) et une tige (5) munie d'un filetage extérieur (6), ainsi qu'une tête de vis (11) destinée à venir se bloquer derrière une contre-dépouille de la rainure longitudinale (14), **caractérisé en ce**
**que** la vis (2) présente un second entraînement (8) sur un côté axial (21, 9) opposé au premier entraînement (20), et que le filetage extérieur (6) est conçu comme un filetage autotaraudeur,
ou
**que** le raccord de profils (1) est réalisé en deux pièces et comprend, outre la vis (2) qui présente un deuxième entraînement (8) sur un côté axial (21, 9) opposé au premier entraînement (20), un manchon (30) associé à la vis (2) et présentant un filetage extérieur de manchon (31) qui est conçu comme un filetage auto-taraudeur, notamment autoforeur ou sans copeaux, permettant de réaliser un engagement positif direct avec l'un des raccords de profils (1) par vissage dans une des rainures longitudinales (3, 12), raccord de profils dans lequel le manchon (30) est muni d'un filetage intérieur (34) correspondant au filetage extérieur (6) de la vis (2) afin de recevoir par vissage la vis (2) dont le filetage extérieur (6) est conçu comme un filetage non-autotaraudeur ou autotaraudeur, ou dans lequel le manchon (30) peut être muni d'un filetage intérieur (34) correspondant au filetage extérieur (6) de la vis (2) afin de recevoir par vissage la vis (2) au moyen du filetage extérieur (6) de la vis (2) qui est conçu comme un filetage autotaraudeur.

2. Raccord de profils selon la revendication 1, **caractérisé en ce que** le filetage extérieur (6) est muni d'un revêtement glissant.

3. Raccord de profils selon l'une des revendications 1 ou 2, **caractérisé en ce que** les entraînements (8, 20) qui sont de préférence conçus comme des entraînements polygonales ou Torx présentent un contour identique.

4. Raccord de profils selon l'une quelconque des revendications précédentes, **caractérisé en ce que** des moyens de contact (19), de préférence une denture ou une section rugueuse, sont prévus, notamment sur une face inférieure (18) de la tête de vis (11) qui est orientée dans le sens de vissage, afin d'abîmer une couche électriquement isolante du raccord de profils (1) recevant la tête de vis (11).

5. Raccord de profils selon l'une quelconque des revendications précédentes, **caractérisé en ce qu**'il est conçu comme une pièce formée à froid, notamment comme une pièce extrudée à froid.

6. Raccord de profils selon l'une quelconque des revendications précédentes, **caractérisé en ce qu**'une section de guidage (23), de préférence sans filetage, est prévue dans le sans de vissage devant le filetage extérieur (6), ladite section de guidage (23) ayant un diamètre inférieur à celui du filetage extérieur (6).

7. Raccord de profils selon l'une quelconque des revendications précédentes, **caractérisé en ce que** le filetage extérieur (6) est conçu comme un filetage en dents de scie comprenant deux flancs de filetage (28, 29) d'inclinaison différente, et que le flanc le moins incliné est tourné vers la tête de vis (11).

8. Utilisation d'un raccord de profils (1) selon l'une quelconque des revendications précédentes pour la production d'un assemblage profilé (26), comprenant une première barre profilée (4) comportant au moins une première rainure longitudinale (3) en contre-dépouille s'étendant parallèlement à l'axe de la première barre profilée (Li), et une deuxième barre profilée (10) comportant au moins une deuxième rainure longitudinale (12) en contre-dépouille s'étendant parallèlement à l'axe de la seconde barre profilée (L2).

9. Assemblage profilé, comprenant une première barre profilée (4) comportant au moins une première rainure longitudinale (3) en contre-dépouille s'étendant parallèlement à l'axe de la première barre profilée (Li), et une deuxième barre profilée (10) comportant au moins une deuxième rainure longitudinale (12) en contre-dépouille s'étendant parallèlement à l'axe de la seconde barre profilée (L2), et un raccord de profils selon l'une des revendications 1 à 7, comprenant une vis (2) présentant un premier entraînement (20) et une tige (5) munie d'un filetage extérieur (6) ainsi qu'une tête de vis (11) destinée à venir se bloquer derrière une contre-dépouille de la rainure longitudinale (14), assemblage profilé dans lequel la vis (2) présente un second entraînement (8) sur un côté axial (21, 9) opposé au premier entraînement (20), et dans lequel la tige (5) de la vis (2) est disposée dans la première rainure longitudinale (3) et la tête de vis (11) est disposée dans la seconde rainure longitudinale (12) et vient se bloquer derrière une contre-dépouille de la rainure longitudinale (14) de la seconde rainure longitudinale (12).

10. Assemblage profilé selon la revendication 9, **caractérisé en ce que** la vis (2) est vissée directement, par son filetage extérieur (6), dans la première barre profilée (4).

11. Assemblage profilé selon la revendication 9, **caractérisé en ce que** la vis (2) est vissée, par son filetage extérieur (6), dans un filetage intérieur (34) d'un manchon (30) qui est vissé (1) dans le premier raccord de profils (1) et reçu dans la première rainure longitudinale (3).

12. Assemblage profilé selon l'une des revendications 10 à 11, **caractérisé par** au moins deux premières rainures longitudinales (3) dans la première barre profilée (4) dans chacun desquels est reçu au moins un raccord de profils (1).
